# EUROPÄISCHE PATENTSCHRIFT

(11) **EP 0 590 182 B1**
(45) Veröffentlichungstag und Bekanntmachung des Hinweises auf die Patenterteilung: **10.09.1997**
(21) Anmeldenummer: 92116653.4
(22) Anmeldetag: 29.09.1992
(51) Int. Cl.: H04Q 11/06, H04M 3/24

(54) **Verfahren zum Betrieb der Zeitstufenelemente bzw. kombinierten Zeit-Raumstufenelemente einer Koppelanordnung einer digitalen Zeitmultiplex Fernmeldevermittlungsstelle**
Method for operating a time stage or a combined time-space stage of the switching network of a time division telecommunication exchange
Procédé d'opération d'un étage de commutation temporel ou d'un étage de commutation combiné temporel-espace du réseau de connexion d'un central de télécommunication à répartition temporelle

(43) Veröffentlichungstag der Anmeldung: 06.04.1994
(73) Patentinhaber: SIEMENS AKTIENGESELLSCHAFT, 80333 München (DE)
(72) Erfinder: Troost, Marcel Abraham, Dipl.-Ing., W-8000 München 71 (DE)

(56) Entgegenhaltungen:
- EP-A- 0 027 226
- EP-A- 0 034 776
- EP-A- 0 042 666
- EP-A- 0 265 837
- US-A- 4 064 369
- COMMUTATION & ELECTRONIQUE Nr. 57, April 1977, PARIS (FR) Seiten 29 - 34 J.F. LAGER 'Techniques de détection d'incidents dans un centre de transit temporel'
- TELCOM REPORT Bd. 9, Nr. 3, 1986, BERLIN (DE) Seiten 181 - 185 E. HAENSEL ET AL 'Sprechwege-Pr fprogramm f r das digitale Koppelnetz macht EWSD sicherer'
- PATENT ABSTRACTS OF JAPAN vol. 11, no. 23 (E-473)(2470) 22. Januar 1987 & JP-A-61 194 962

## Beschreibung

Die Erfindung betrifft ein Verfahren zum Betrieb der Zeitstufenelemente bzw. kombinierten Zeit-Raumstufenelemente einer Koppelanordnung einer digitalen Zeitmultiplex-Fernmeldevermittlungsstelle gemäß dem Oberbegriff des Patentanspruchs 1.

Zeitstufenelemente der Koppelanordnung von digitalen Zeitmultiplex-Fernmeldevermittlungsstellen dienen, sofern an sie lediglich eine Zeitmultiplexleitung für ankommende Übertragungsrichtung und eine Zeitmultiplexleitung für abgehende Übertragungsrichtung angeschlossen ist, auf denen Zeitlagen einer Mehrzahl von Zeitkanälen gebildet sind, dazu, Zeitkanalumsetzungen von jeweils einer Zeitlage auf der ankommenden Zeitmultiplexleitung in eine Zeitlage der abgehenden Zeitmultiplexleitung vorzunehmen. Beim Anschluß von mehreren Zeitmultiplexleitungen für ankommende und abgehende Übertragungsrichtung kann mit solchen Zeitstufenelementen sowohl eine Zeitkanalumsetzung von Zeitlagen auf ankommenden Zeitmultiplexleitungen in Zeitlagen, die auf abgehenden Zeitmultiplexleitungen gebildet sind, vorgenommen werden, als auch eine räumliche Vermittlung der auf den Zeitmultiplexleitungen für ankommende Übertragungsrichtung angelieferten Informationen auf eine beliebige der angeschlossenen Zeitmultiplexleitungen für abgehende Übertragungsrichtung bewirkt werden. Im letztgenannten Fall handelt es sich nicht um ein Zeitstufenelement im strengen Sinne, sondern um ein kombiniertes Zeit-Raumstufenelement, wobei jedoch auch die Vorgänge der räumlichen Vermittlung auf Zeitumsetzungen zurückgeführt sind.

Wesentlicher Bestandteil solcher Zeitstufenelemente bzw. kombinierter Zeit-Raumstufenelemente ist ein Informationsspeicher, der den Zeitkanälen individuell zugeordnete Speicherzellen für jeweils ein PCM-Wort aufweist, in die zyklisch die auf den angeschlossenen Zeitmultiplexleitungen angelieferten Informationen eingeschrieben werden. Angesteuert durch Ansteueradressen, die in einem Haltespeicher enthalten sind, der ebenfalls zyklisch angesteuert wird, werden diese Informationen dann wieder wahlfrei auf jeweils eine Zeitmultiplexleitung für abgehende Übertragungsrichtung in der einem bestimmten Zeitkanal entsprechenden Zeitlage ausgelesen.

In der Regel weisen Koppelanordnungen von digitalen Zeitmultiplex-Fernmeldevermittlungsstellen eine Mehrzahl solcher Zeitstufenelemente bzw. kombinierten Zeit-Raumstufenelemente auf, die durch ein ein- oder mehrstufiges Raumkoppelfeld zusammengefaßt sind.

Der genannte Haltespeicher kann dadurch auf ordnungsgemäße Funktion geprüft werden, daß jeweils nach dem Neueintrag einer Ansteueradresse für den Informationsspeicher vor der Durchschaltung der betreffenden Verbindung die Ansteueradresse sofort wieder ausgelesen und einem Vergleich mit der eingeschriebenen Ansteueradresse zugeführt wird.

Für die Prüfung der Durchschaltung der Sprechwegeverbindungen wurde bisher so vorgegangen, daß über einen solchen Sprechweg eine Verbindung zwischen einem externen Prüfmustergenerator und einem Prüfmusterempfänger hergestellt wurde und eine Überwachung auf den ordnungsgemäßen Empfang des erwarteten Prüfmusters erfolgte.

Es besteht allerdings ein Interesse daran, die Einrichtungen, die für eine derartige Prüfung benötigt werden, in das Koppelnetz zu integrieren.

Die Aufgabe der Erfindung besteht daher darin, ein Verfahren für den Betrieb der Zeitstufenelemente bzw. kombinierten Zeit-Raumstufenelemente einer Koppelanordnung einer digitalen Zeitmultiplex-Fernmeldevermittlungsanlage anzugeben, das eine derartige Integration gestattet.

Diese Aufgabe wird durch die im Kennzeichen des Patentanspruchs 1 angegebenen Merkmale gelöst.

Demnach ist außer dem eigentlichen, obenstehend erläuterten Vermittlungsmodus des Betriebs der Zeitstufe bzw. kombinierten Zeit-Raumstufe ein Testmodus vorgesehen, in dem der Informationsspeicher wahlweise als Prüfmusterempfänger, als Prüfmustergenerator oder als Kanalmonitor ausgenutzt werden kann, womit die Voraussetzungen für eine Integration der für eine Koppelnetzprüfung benötigten Teile in das Koppelnetz selbst geschaffen sind.

Weitere Ausgestaltungen der Erfindung sind in den Unteransprüchen angegeben.

Bei einer ersten solchen Ausgestaltung werden bei der Ausnutzung des Informationsspeichers als Prüfmustergenerator beim Informationsspeicher und beim Haltespeicher nur die einem Zeitkanal entsprechenden Speicherzellen mit einem Prüfmusterwort im Falle des Informationsspeichers bzw. mit einer Anzahl der an den Informationsspeicher angeschlossenen Zeitmultiplexleitungen für abgehende Übertragungsrichtung entsprechenden Anzahl von Ansteueradressen im Falle des Haltespeichers beschrieben. Der Haltespeicher wird dabei so gesteuert, daß nur die beschriebenen Speicherzellen zyklisch wiederholt und ausgelesen werden. Der Informationsspeicher kann hierdurch als Prüfmustergenerator wirken, ohne daß sämtliche Haltespeicherzellen und sämtliche Informationsspeicherzellen beschrieben zu werden brauchen.

Eine andere Ausgestaltung betrifft die Ausnutzung des Informationsspeichers als Kanalmonitor und eröffnet die Möglichkeit einer Überwachung ohne Unterbrechung der bestehenden Sprechverbindung.

Nachstehend wird die Erfindung anhand eines Ausführungsbeispiels unter Bezugnahme auf eine FIGUR näher erläutert.

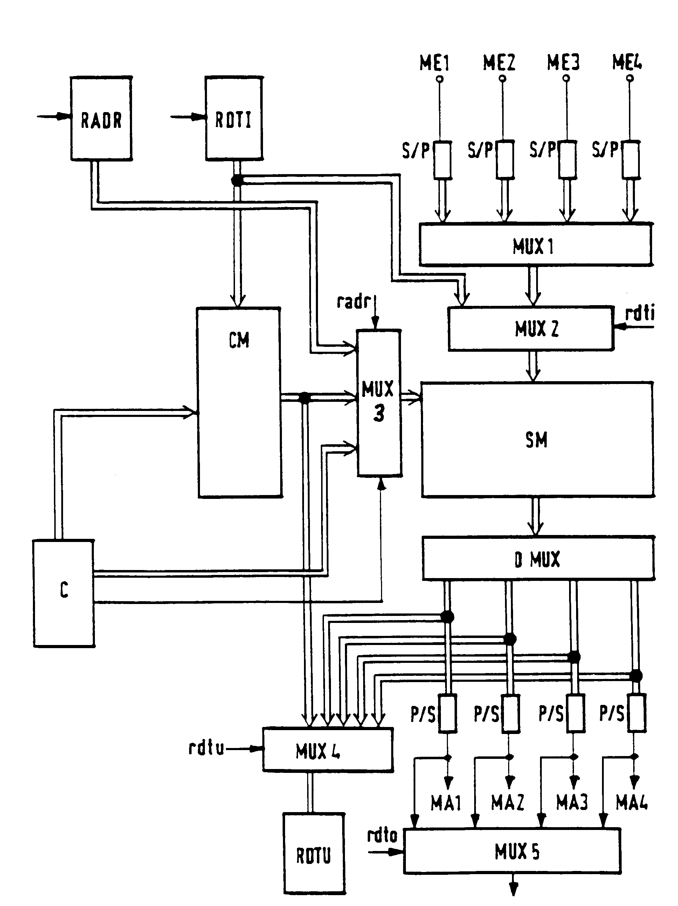

Die FIGUR zeigt ein kombiniertes Zeit-Raumstufenelement einer digitalen Zeitmultiplex-Fernmeldevermittlungsstelle, das für den Anschluß von vier Zeitmultiplexleitungen für ankommende Übertragungsrichtung und vier Zeitmultiplexleitungen für abgehende Übertragungsrichtung ausgelegt ist. Kernbestandteil dieses Zeit-Raumstufenelementes ist ein Informationsspeicher SM, an den die vier Zeitmultiplexleitungen für ankommende Übertragungsrichtung ME1...ME4 über Serien-Parallel-Wandler S/P und über Multiplexer Mux1 und Mux2 angeschlossen sind. Die Zeitmultiplexleitungen für abgehende Übertragungsrichtung MA1...MA4 gehen über einen Demultiplexer DMux und über Parallel-Serien-Wandler P/S von diesem Informationsspeicher SM ab.

Jedem der auf den Zeitmultiplexleitungen für ankommende Übertragungsrichtung gebildeten Zeitkanäle ist im Informationsspeicher SM individuell eine Speicherzelle für jeweils ein PCM-Wort zugeordnet.

Das Einschreiben in diesen Informationsspeicher von den Zeitmultiplexleitungen für ankommende Übertragungsrichtung aus erfolgt zyklisch in der Weise, daß nacheinander die Informationsinhalte der ersten Zeitkanäle auf den Zeitmultiplexleitungen eingeschrieben werden, dann in entsprechender Weise der Eintrag der zweiten Zeitkanäle erfolgt, usw. Die Ansteueradressen für einen derartigen zyklischen Eintrag werden von einem Zähler C über einen Multiplexer Mux3 geliefert.

Die Ansteueradressen für das wahlfreie Auslesen des Informationsspeichers SM liefert im Normalfall ein Haltespeicher CM, ebenfalls über den Multiplexer Mux3. Er wird seinerseits durch Ausleseansteueradressen beaufschlagt, die ebenfalls der Zähler C liefert. Im Vermittlungsbetrieb des Zeitstufenelementes erfolgt das zyklische Einschreiben in den Informationsspeicher SM und das wahlfreie Auslesen aus diesem jeweils abwechselnd. Das heißt, die vom Zähler C gelieferten Einschreibsteueradressen und die vom Haltespeicher CM bereitgestellten Ausleseansteueradressen müssen ebenfalls abwechselnd auftreten. Dies wird dadurch erreicht, daß der Zähler C mit seinem niedrigstwertigen Bit den Multiplexer Mux3 derart beeinflußt, daß abwechselnd die vom Zähler C gelieferten Ansteueradressen (als Einschreibansteueradressen) und die vom Haltespeicher CM gelieferten Ansteueradressen (als Ausleseansteueradressen) an den Informationsspeicher SM gelangen.

Außer dem angedeuteten Vermittlungsbetrieb, in dem ein zyklisches Einschreiben von auf den Zeitmultiplexleitungen ME1...ME4 für ankommende Übertragungsrichtung angelieferten Informationen in den Informationsspeicher und ein wahlfreies Auslesen dieser Informationen auf die Zeitmultiplexleitungen MA1...MA4 für abgehende Übertragungsrichtung erfolgt, ist erfindungsgemäß ein Testbetriebsmodus vorgesehen, der drei wahlweise einstellbare Betriebsarten umfaßt, in denen das Zeitstufenelement bzw. kombinierte Zeit-Raumstufenelement entweder als Prüfmusterempfänger oder als Prüfmustergenerator oder als Kanalmonitor ausgenutzt wird.

Im Falle der Ausnutzung als Prüfmusterempfänger wird der Informationsspeicher SM im Zuge einer aufgebauten Prüfverbindung mit einem Prüfmustergenerator wie im Vermittlungsbetrieb im Einschreibzyklus mit einem von einem Prüfmustergenerator gelieferten Prüfmuster beschrieben.

Danach werden diese Prüfmuster unter Ansteuerung durch eine in einem Prüfsteuerregister RADR befindliche Ansteueradresse anstelle einer vom Haltespeicher CM gelieferten Ansteueradresse wahlfrei ausgelesen. Die im Prüfsteuerregister RADR befindliche Ansteueradresse gelangt über den Multiplexer Mux3 an den Informationsspeicher SM, wobei ein diesen Multiplexer beeinflussendes Steuersignal radr sicherstellt, daß in dieser Betriebsphase weder vom Haltespeicher CM noch vom Zähler C gelieferte Ansteueradressen den Multiplexer passieren können.

Das Auslesen aus dem Informationsspeicher erfolgt vorzugsweise nach Unterbindung weiterer Einschreibvorgänge.

Im Gegensatz zum normalen Vermittlungsbetrieb werden die ausgelesenen Informationen nicht auf die Zeitmultiplexleitung MA1...MA4 für abgehende Übertragungsrichtung, sondern über den Multiplexer Mux4, der in dieser Phase von dem Steuersignal rdtu beaufschlagt wird, in ein Prüfempfangsregister RDTU eingelesen. Von diesem Register aus werden die Prüfmuster in hier nicht dargestellter Weise einem Vergleich mit dem ursprünglich ausgesendeten Prüfmuster zugeführt.

In der Betriebsart, in der das Zeitstufenelement bzw. kombinierte Zeit-Raumstufenelement als Prüfmustergenerator ausgenutzt ist, wird das im normalen Vermittlungsbetrieb ablaufende zyklische Einschreiben von den Zeitmultiplexleitungen für ankommende Übertragungsrichtung aus unterbunden, wozu der Multiplexer Mux2 mit einem Steuersignal rdti beaufschlagt wird. Stattdessen werden Prüfmuster eingeschrieben, die in einem Prüfsenderegister RDTI stehen. Dies geschieht wahlfrei unter Ansteuerung durch eine in dem schon erwähnten Prüfsteuerregister RADR befindliche Ansteueradresse anstelle der zyklischen Ansteuerung durch den Zähler C.

Das Auslesen dieser Prüfmuster erfolgt wie im Vermittlungsbetrieb, also wahlfrei, auf eine der Zeitmultiplexleitungen für abgehende Übertragungsrichtung MA1...MA4.

Gemäß einer weiteren Ausgestaltung der Erfindung werden bei einer solchen Ausnutzung als Prüfmustergenerator sowohl beim Informationsspeicher SM als auch beim Haltespeicher CM nur die einem Zeitkanal entsprechenden Speicherzellen mit einem Prüfmusterwort im Falle des Informationsspeichers bzw. mit einer Ansteueradresse im Falle des Haltespeichers beschrieben. Der Haltespeicher CM wird dabei so gesteuert, daß nur die beschriebenen Speicherzellen zyklisch wiederholt ausgelesen werden. Es können dann zwar die Prüfmuster nur in der Zeitlage eines Zeitkanals ausgesendet werden, was jedoch kein Nachteil ist, da beim Aufbau von Prüfverbindungen, zu denen ein solcher Art realisierter Prüfgenerator die Prüfmuster liefert, die an dieser Prüfverbindung beteiligten Koppelanordnungsbestandteile die erforderliche Zeitkanalumsetzung vornehmen werden. Andererseits ist die Beschränkung beim Beschreiben von Haltespeicher und Informationsspeicher des als Prüfmustergenerator ausgenutzten Zeitstufenelementes bzw. kombinierten Zeit-Raumstufenelementes, insbesondere im Hinblick auf eine Zeitersparnis, von Vorteil.

Bei der Ausnutzung des Zeitstufenelementes bzw. kombinierten Zeit-Raumstufenelementes als Kanalmonitor erfolgt ein Einschreiben von auf den Zeitmultiplexleitungen für ankommende Übertragungsrichtung angelieferten Informationen in den Informationsspeicher SM wie im Vermittlungsbetrieb, also zyklisch, gesteuert durch den Zähler C. Das Auslesen aus dem Informationsspeicher erfolgt jedoch im Gegensatz zu den Verhältnissen im Vermittlungsbetrieb nicht oder zumindest nicht ausschließlich unter Ansteuerung durch den Haltespeicher auf die Zeitmultiplexleitungen für abgehende Übertragungsrichtung, sondern angesteuert durch eine im schon erwähnten Prüfsteuerregister RADR befindliche Ansteueradresse und über den durch ein Steuersignal rdto beeinflußten Multiplexer Mux5 wahlfrei in ein weiteres hier nicht dargestelltes Empfangsregister Es kann hiermit kanalweise geprüft werden, ob, wie zu erwarten, die angelieferten Informationen sich von Pulsrahmen zu Pulsrahmen ändern und nicht fehlerbedingt dauernd dieselbe Information ausgelesen wird.

## Patentansprüche

1. Verfahren zum Betrieb eines Zeitstufenelementes bzw. kombinierten Zeit-Raumstufenelementes einer Koppelanordnung einer digitalen Zeitmultiplex-Fernmeldevermittlungsstelle,
**dadurch gekennzeichnet,**
daß außer dem eigentlichen Vermittlungsbetriebsmodus, in dem auf Zeitmultiplexleitungen für ankommende Übertragungsrichtung (ME1...ME4) in Zeitlagen von Zeitkanälen angelieferte Fernmeldeinformationen in den Informationsspeicher (SM) des Zeitstufenelements bzw. Zeit-Raumstufenelements in den Zeitkanälen und Multiplexleitungen individuell zugeordnete Speicherzellen für jeweils ein PCM-Wort zyklisch eingeschrieben und, gesteuert durch von einem zyklisch ausgelesenen Haltespeicher (CM) gelieferte Ansteueradressen, wahlfrei wieder auf Multiplexleitungen für abgehende Übertragungsrichtung (MA1...MA4) ausgelesen werden,
ein Testmodus vorgesehen ist, in dem der Informationsspeicher (SM) wahlweise
als Prüfmusterempfänger ausgenutzt ist, wozu er im Zusammenhang mit einer Prüfverbindung mit einem Prüfmustergenerator wie im Vermittlungsbetrieb unter zyklischer Einschreibansteuerung mit einem vom Prüfmustergenerator gelieferten Prüfmuster beschrieben wird, und vorzugsweise bei Unterbindung weiterer Einschreibvorgänge und unter Ansteuerung durch eine in einem Prüfsteuerregister (RADR) befindliche Ansteueradresse anstelle einer vom Haltespeicher gelieferten Ansteueradresse wahlfrei, jedoch in ein Prüfempfangsregister (RDTU) anstelle auf eine Multiplexleitung für abgehende Übertragungsrichtung ausgelesen wird, von dem aus ein Vergleich mit dem vom Prüfmustergenerator ausgesendeten Prüfmuster erfolgt, oder als Prüfmustergenerator ausgenutzt ist, wozu er bei unterbundenem Einschreiben von einer Zeitmultiplexleitung für ankommende Übertragungsrichtung (ME1...ME4) aus mit einem in einem Prüfsenderegister (RDTI) befindlichen Prüfmuster unter Ansteuerung durch eine in dem genannten Prüfsteuerregister (RADR) befindliche Ansteueradresse anstelle der zyklischen Einschreibansteuerung durch den Zähler (C) wahlfrei eingeschrieben und wie im Vermittlungsbetrieb wahlfrei ausgelesen wird, oder
als Kanalmonitor ausgenutzt ist, wozu er wie im Vermittlungsbetrieb beschrieben und, angesteuert durch eine im genannten Prüfsteuerregister (RADR) befindliche Ansteueradresse wahlfrei in ein weiteres Empfangsregister ausgelesen wird.

2. Verfahren nach Anspruch 1,
**dadurch gekennzeichnet,**
daß bei der Ausnutzung des Informationsspeichers (SM) als Prüfgenerator beim Informationsspeicher (SM) und beim Haltespeicher (CM) nur die einem Zeitkanal entsprechenden Speicherzellen beschrieben werden, und zwar mit einem Prüfmusterwort im Falle des Informationsspeicher (SM) und mit Ansteueradressen im Falle des Haltespeichers (CM), und daß der Haltespeicher (CM) so gesteuert wird, daß nur die beschriebenen Speicherzellen zyklisch wiederholt ausgelesen werden.

3. Verfahren nach Anspruch 1 oder 2,
**dadurch gekennzeichnet,**
daß bei Ausnutzung des Informationsspeichers (SM) als Kanalmonitor dieser außerdem, angesteuert durch den Haltespeicher (CM), wahlfrei auf die Zeitmultiplexleitungen für abgehende Übertragungsrichtung (MA1...MA4) ausgelesen wird.

## Claims

1. Method for operating a time stage element or combined time-space stage element of a switching network of a digital time-division multiplex communication exchange, characterized in that apart from the actual switching mode of operation, in which communication information supplied in time slots of time channels and time-division multiplex lines for the incoming direction of transmission (ME1...ME4) are cyclically written into the information memory (SM) of the time stage element or time-space stage element in memory cells allocated individually to the time channels and multiplex lines, for in each case one PCM word and, controlled by select addresses supplied by a latch (CM) read out cyclically, optionally back to multiplex lines for the outgoing direction of transmission (MA1...MA4),
a test mode is provided in which the information memory (SM) is optionally used as test pattern receiver, for which purpose a test pattern supplied by the test pattern generator is written into it under cyclic write control as in the switching mode in conjunction with a test connection to a test pattern generator, and is read out, preferably with further write processes being inhibited and under control by a select address located in a test control register (RADR) instead of a select address supplied by the latch, optionally into a test receive register (RDTU) instead of a multiplex line for the outgoing transmission direction, from which register a comparison made with the test pattern sent out by the test pattern generator results, or is used as test pattern generator, for which purpose a test pattern located in a test transmit register (RDTI) is optionally written in, the writing from a time-division multiplex line for the incoming direction of transmission (ME1...ME4) being inhibited, under control by a select address located in the said test control register (RADR) instead of the cyclic write control by the counter (C) and is optionally read out as in the switching mode, or is utilized as channel monitor, for which purpose it is written into as in the switching mode and, controlled by a select address located in the said test control register (RADR), is optionally read out into a further receive register.

2. Method according to Claim 1, characterized in that, when the information memory (SM) is used as test generator, in the information memory (SM) and in the latch (CM) only the memory cells corresponding to a time channel are written into, namely with a test pattern word in the case of the information memory (SM) and with select addresses in the case of the latch (CM), and that the latch (CM) is controlled in such a manner that only the written-into memory cells are cyclically repeatedly read out.

3. Method according to Claim 1 or 2, characterized in that when the information memory (SM) is used as general monitor, the latter is also optionally read out to the time-division multiplex lines for the outgoing direction of transmission (MA1...MA4) and are controlled by the latch (CM).

## Revendications

1. Procédé d'exploitation d'un étage de commutation temporelle et/ou d'un étage combiné de commutation temporelle-spatiale du dispositif de commutation d'un central numérique de commutation téléphonique à multiplexage temporel,
**caractérisé par**
le fait que, à part le mode d'exploitation de commutation proprement dit, au cours duquel des informations de télécommunication délivrées dans des positions temporelles de voies sur des lignes multiplex dans le sens de transmission en arrivée (ME1 ... ME4) sont inscrites d'une manière cyclique dans des cellules de mémoire de la mémoire tampon (SM) de l'étage de commutation temporelle et/ou de l'étage combiné de commutation temporelle-spatiale, attribuées individuellement chacune pour un mot en MIC aux voies temporelles et aux lignes de multiplex et, commandées par les adresses de sélection fournies par une mémoire de commande (CM) lue en sortie d'une manière cyclique, relues en sortie d'une façon aléatoire vers les lignes multiplex (MA1 ... MA4) dans le sens de transmission en sortie,
un mode de test est prévu pour lequel la mémoire tampon (SM) est utilisée alternativement
comme récepteur de référence de test, ce pourquoi, en relation avec une liaison de test avec un générateur de référence de test, il est chargé, comme en service de commutation sous une commande cyclique d'écriture, avec une référence de test fournie par un générateur de référence de test, puis, de préférence avec blocage d'autres processus d'écriture et sous la commande d'une adresse de sélection contenue dans un registre de commande de test (RADR) à la place d'une adresse de sélection fournie par la mémoire de commande, lu en sortie d'une façon aléatoire, cependant vers un registre de réception de test (RDTU) et non vers une ligne de multiplex pour la direction de transmission en sortie, registre à partir duquel a lieu une comparaison avec la référence de test émise par le générateur de référence de test, ou
comme générateur de référence de test, ce pourquoi, l'écriture à partir d'une ligne de multiplex pour la direction de transmission en entrée (ME1 ... ME4) étant bloquée, il est chargé avec une référence de test se trouvant dans un registre d'émission de test (RDTl) sous la commande aléatoire d'une adresse de sélection qui se trouve dans le dit registre de commande de test (RADR) au lieu de la commande cyclique d'écriture par le compteur C, puis est, comme pour le service de commutation, lu en sortie d'une façon aléatoire, ou
comme moniteur de voie, ce pourquoi il est chargé, comme lors du service de commutation, puis, commandé d'une façon aléatoire par une adresse de sélection qui se trouve dans le dit registre de commande de test (RADR), lu en sortie vers un autre registre de réception.

2. Procédé conforme à la revendication 1,
**caractérisé par**
le fait que, lors de l'utilisation de la mémoire tampon (SM) comme générateur de test, seules les cellules de mémoire de la mémoire tampon (SM) et de la mémoire de commande (CM) correspondant à une voie sont chargées, et ceci avec un mot de référence de test dans le cas de la mémoire tampon (SM) et respectivement avec des adresses de sélection dans le cas de la mémoire de commande (CM) et que la mémoire de commande (CM) est commandée de telle sorte que seules les cellules de mémoire chargées sont relues en sortie avec répétition cyclique.

3. Procédé conforme à la revendication 1 ou à la revendication 2,
**caractérisé par**
le fait que, lors de l'utilisation de la mémoire tampon (SM) comme moniteur de voie, celui-ci est, de surcroît, commandé par la mémoire de commande (CM), lu en sortie, d'une façon aléatoire, vers les lignes de multiplex (MA1 ... MA4) pour la direction de transmission en sortie.
